# EUROPÄISCHE PATENTANMELDUNG

(11) **EP 4 141 805 A1**
(43) Veröffentlichungstag der Anmeldung: **01.03.2023**
(21) Anmeldenummer: 21193801.4
(22) Anmeldetag: 30.08.2021
(51) Int. Cl.: G06V 10/25, G06V 10/774, G06V 20/52, G06V 20/70

(54) **VERFAHREN ZUM ERZEUGEN, AUTOMATISIERTEN ANNOTIEREN UND BEREITSTELLEN VON TRAININGS-BILDDATEN**

(71) Anmelder: Siemens Aktiengesellschaft, 80333 München (DE)
(72) Erfinder: FIEGERT, Michael, 81739 München (DE); ALBRECHT, Felix, 91080 Marloffstein (DE); B VENKATARAMAN, Saadhana, 600099 Chennai (IN); METZNER, Maximilian, 96047 Bamberg (DE)

(57) **Zusammenfassung**

Die Erfindung betrifft ein computerimplementiertes Verfahren zum Erzeugen, automatisierten Annotieren und zum Bereitstellen von Trainings-Bilddaten zum Trainieren einer Funktion zu einer Erkennung von in einer Umgebung befindlichen Objekten, wobei das Verfahren umfasst:
S I: Erzeugen einer Sequenz aus i=1, 2, ..., n Bildern (B₁, B₂, ..., Bₙ), wobei das i-te Bild (Bᵢ) der Sequenz ein Bild einer Umgebung mit i darin enthaltenen, zu erkennenden Objekten (O₁, O₂, ... Oₙ) ist;
S II: Berechnen eines Differenzbildes (Dᵢ₋₍ᵢ₋₁₎) des i-ten Bildes (Bᵢ) zu dem (i-1)-ten Bild (Bᵢ₋₁) der Sequenz für jedes i=2,...,n, wobei für i=1 ein Differenzbild des Bildes (B₁) mit nur einem zu erkennenden Objekt und dem Bild der Umgebung (B₀) berechnet wird.
S III: Anwenden eines Algorithmus auf die Differenzbilder (Dᵢ₋₍ᵢ₋₁₎), um jedes Differenzbild (Dᵢ₋₍ᵢ₋₁₎) zu annotieren.
S IV: Annotieren der Bilder der Sequenz anhand der Differenzbilder-Annotationen (Lᵢ₋₍ᵢ₋₁₎) .
S V: Bereitstellen der annotierten Trainings-Bilddaten.

## Beschreibung

Die Erfindung betrifft ein computerimplementiertes Verfahren zum Erzeugen, automatisierten Annotieren und zum Bereitstellen von Trainings-Bilddaten zum Trainieren einer Funktion zu einer Erkennung von in einer Umgebung befindlichen Objekten.

Darüber hinaus betrifft die Erfindung ein System, in dem das vorgenannte Verfahren implementiert werden kann.

Außerdem betrifft die Erfindung ein Computerprogrammprodukt mit Befehlen, die bewirken, dass ein solches System das vorgenannte Verfahren ausführt.

Obendrein betrifft die Erfindung eine Verwendung der nach dem vorgenannten Verfahren bereitgestellten annotierten Trainings-Bilddaten zum Trainieren einer Funktion.

Maschinelle Lernverfahren, insbesondere Künstliche Neuronale Netze (KNN), stellen in der Bildverarbeitung ein gigantisches Potenzial für eine Verbesserung der Leistungsfähigkeit und Robustheit bei gleichzeitiger Verringerung des Einrichtungsund Pflegeaufwands dar. Insbesondere kommen hierbei Faltende Neuronale Netze (Convolutional Neural Networks - CNN) zum Einsatz. Einsatzgebiete umfassen die Bildklassifikation (z.B. für eine gut/schlecht Prüfung), die Objekterkennung, die Poseschätzung sowie die Segmentierung.

Grundlage aller maschinellen Lernverfahren, insbesondere KNNs und CNNs, ist eine selbstständige, auf Daten basierende, Optimierung des Programms, im Gegensatz zur expliziten Regelvergabe der klassischen Programmierung. Insbesondere bei CNNs kommen dabei größtenteils überwachte Lernverfahren zum Einsatz. Diese sind dadurch gekennzeichnet, dass für das Training sowohl beispielhafte Daten als auch das zugehörige richtige Ergebnis, das sogenannte Label, benötigt werden.

Für das Training von CNNs werden sehr viele Datensätze, z.B. 2D- und/oder 3D-Bilder, mit entsprechendem Label benötigt. Die Erstellung des Labels erfolgt dabei klassischerweise manuell. Während dies bei der Klassifizierung (z.B. gut/ schlecht) wenig Zeit erfordert, ist dies bei der Objekterkennung, der Poseschätzung sowie der Segmentierung zunehmend aufwändig. Dies stellt einen substantiellen Aufwand beim Einsatz KI-basierter Bildverarbeitungslösungen dar. Es fehlt daher eine Methode, dieses Labeling für derartige Verfahren (insb. Objekterkennung, auf Poseschätzung oder Segmentierung übertragbar) zu automatisieren.

Die Beschaffung korrekter Trainingsdaten stellt beim Einsatz KI-basierter Verfahren einen, wenn nicht den größten, Aufwandsfaktor dar.

Es gibt bestehende Ansätze, die benötigten Trainingsdaten synthetisch, anhand eines Digitalen Zwillings, zu erzeugen, da hier eine automatisierte Ausleitung des Labels relativ kostengünstig ist, und beliebig viele Daten erzeugt werden können (siehe auch EP Anmeldung der Anmelderin 20176860.3). Problematisch hierbei ist, dass die synthetischen Daten klassischerweise nicht alle realen optischen Eigenschaften und Einflüsse (z.B. Reflexionen, natürliche Beleuchtung, etc.) abbilden können, oder aber extrem rechenintensiv sind (vgl. https://arxiv.org/pdf/1902.03334.pdf; hier wurden 400 Rechencluster mit jeweils 16-Kern CPU mit 112 GB RAM verwendet). Derartig trainierte Netze sind daher zwar grundlegend funktionsfähig, jedoch in der Realität meist nicht vollständig robust (80%-Lösung). Daher ist weiterhin meist ein Nachtraining mit realen, gelabelten Daten notwendig, um eine für den industriellen Einsatz notwendigen Leistungsfähigkeit zu erreichen.

Die Aufgabe der vorliegenden Erfindung kann somit darin gesehen werden, Verfahren und Systeme zur Bereitstellung von Trainings-Bilddaten bereitzustellen, die die Robustheit der darauf trainierten Funktionen bzw. Modelle verbessert.

Die Aufgabe wird mit einem eingangs genannten computerimplementierten Verfahren erfindungsgemäß dadurch gelöst, dass das Verfahren folgende Schritte aufweist:
S I: Erzeugen einer Sequenz aus i=0, 1, ..., n Bildern (einer Bildersequenz von n+1 Bildern), wobei n größergleich 1 ist, wobei das i-te Bild der Sequenz ein Bild einer Umgebung mit (genau) i darin enthaltenen, zu erkennenden Objekten ist,
S II: Berechnen eines Differenzbildes des i-ten Bildes zu dem (i-1)-ten Bild der Sequenz für jedes i=2,...,n, sodass in dem Differenzbild nur die Änderung des i-ten Bildes zu seinem Vorgänger vorhanden ist, wobei für i=1 ein Differenzbild des Bildes mit nur einem zu erkennenden Objekt und dem Bild der Umgebung berechnet wird,
S III: Anwenden eines Algorithmus, der bspw. auf einem vortrainierten Modell basiert, auf die Differenzbilder, vorzugsweise auf jedes Differenzbild, um jedes Differenzbild zu annotieren,
S IV: Annotieren der Bilder der Sequenz anhand der Differenzbilder-Annotationen,
S V: Bereitstellen der annotierten Trainings-Bilddaten.

Jedes Objekt kann auch Teil-Objekte umfassen, die zu einer Gesamtheit - zu einem Objekt - zusammengefasst werden können.

Bei einer Ausführungsform kann es vorgesehen sein, dass das Erzeugen der Bildersequenz damit anfängt, dass ein Referenzbild erzeugt wird.

Das Referenzbild kann beispielsweise als ein Bild einer leeren Umgebung, d.h. einer Umgebung ohne der zu erkennenden Objekte, oder einer Umgebung mit allen (n) in der Umgebung positionierten, zu erkennenden Objekten ausgebildet sein. Das Erzeugen des Referenzbildes kann durch Aufnehmen mittels einer Kamera erfolgen.

Es kann es kann zweckdienlich sein, wenn die Umgebung eine reale Umgebung ist, in der die trainierte Funktion später angewandt/verwendet werden soll, oder einer solchen Umgebung, zumindest ausreichend ähnlich ist. Das Referenzbild einer leeren Umgebung hat ein leeres Label, da kein relevantes Objekt vorhanden ist.

Es soll somit eine Umgebung ausgewählt werden, die zumindest sehr ähnlich der Umgebung ist, bei der die Funktion angewandt werden soll, die auf den Trainings-Bilddaten trainiert wird.

Bei einer Ausführungsform kann es vorgesehen sein, dass das Erzeugen ein Hinzufügen, beispielsweise ein händisches oder automatisches Hinzufügen der Objekte, vorzugsweise ein iteratives Hinzufügen (z.B. einzelner) Objekte in die Umgebung und Aufnehmen, z. B. mit einer Kamera, der Umgebung mit den in die Umgebung hinzugefügten Objekten umfasst.

Mit anderen Worten kann die Bildersequenz dadurch erzeugt werden, dass die Umgebung (z.B. leere Umgebung als Referenzbild) aufgenommen wird, anschließend die Objekte in der Umgebung platziert (z.B. gelegt) werden und dieser Prozess (nach jedem Hinzufügen) wiederholt wird.

Mit anderen Worten hat die Ausführungsform ein Verfahren zum Gegenstand, bei welchem mittels einer iterativen Erweiterung der Szene (Nachlegen der Teile, z.B. eines einzelnen Teils) jeweils ein Differenzbild generiert wird, welches nur noch die Erweiterung (das(die) zugelegte(n) Teil(e)) selbst enthält und damit eine vereinfachte Klassifizierung/Inferenz erlaubt. Hierdurch kann das Labeling auf diesen vereinfachten Daten (teil-)automatisiert werden.

Bei einer Ausführungsform kann es vorgesehen sein, dass das Erzeugen ein Entfernen, beispielsweise ein händisches oder automatisches Entfernen der Objekte, vorzugsweise ein iteratives Entfernen (z.B. einzelner) Objekte aus der Umgebung und Aufnehmen, z. B. mit einer Kamera, der Umgebung mit den in der Umgebung gebliebenen Objekten umfasst.

Mit anderen Worten kann die Bildersequenz dadurch erzeugt werden, dass die Umgebung mit darin platzierten Objekten (z.B. mit allen zu erkennenden Objekten als Referenzbild) aufgenommen wird, anschließend die Objekte aus der Umgebung entfernt werden und dieser Prozess (nach jedem Entfernen) wiederholt wird.

Mit anderen Worten hat die Ausführungsform ein Verfahren zum Gegenstand, bei welchem mittels einer iterativen Reduzierung der Szene (Entfernen der Teile, z.B. einzelnen Teils) jeweils ein Differenzbild generiert wird, welches nur noch die Reduktion (das(die) zugelegte(n) Teil(e)) selbst enthält und damit eine vereinfachte Klassifizierung/Inferenz erlaubt. Hierdurch kann das Labeling auf diesen vereinfachten Daten (teil-)automatisiert werden.

Durch Aufnehmen realer Daten kann die Robustheit des auf diesen Trainings-Bilddaten trainierten Netzes erhöht werden.

Bei einer Ausführungsform kann es vorgesehen sein, dass die Umgebung eine unbestückte Leiterplatte oder einen leeren zur Aufnahme von mit einem Roboterarm greifbaren Bauteilen vorgesehenen Behälter umfasst.

Bei einer Ausführungsform kann es vorgesehen sein, dass die Objekte als elektronische Bauelemente ausgebildet sind. Somit können die Bilder der Sequenz beispielsweise Aufnahmen von einer mit einer (der Nummer des Bildes in der Sequenz entsprechenden) Anzahl von Bauelementen bestückten Leiterplatte oder von einem Behälter, der eine (der Nummer des Bildes in der Sequenz entsprechenden) Anzahl von Bauelementen enthält, sein

Bei einer Ausführungsform kann es vorgesehen sein, dass die Objekte an zufälligen / zufällig gewählten Positionen in der Umgebung angeordnet sind.

Bei einer Ausführungsform kann es vorgesehen sein, dass die Positionen und/oder Orientierung der Objekte im Raum (nachdem sie in die Umgebung hinzugefügt werden) nicht mehr verändert werden, bis die Sequenz erzeugt ist. D.h. Objekt 1 bleibt an der Position 1, Objekt 2 - an der Position 2 usw. Sie dürfen nicht verschoben und/oder verdreht werden. Das ist zweckmäßig, da sonst die vorher erzeugten Label der bereits liegenden Teile nicht mehr passen.

Bei einer Ausführungsform kann es vorgesehen sein, dass Schritt S I wiederholt wird, um zwei oder mehr Sequenzen zu erzeugen. Durch Erzeugen mehrerer Bildsequenzen wird die Menge an den annotierten Trainings-Bilddaten und dadurch die Qualität des Trainingsdatensatzes erhöht.

Bei einer Ausführungsform kann es vorgesehen sein, dass zum Berechnen der Differenzbilder alle Pixel/Punkte mit einer (von Null abweichenden) Differenz der Farb- und/oder Tiefenwerte zum Vorgänger(-Bild) auf null gesetzt werden und/oder eine Blob-Detektion des Bereichs mit der größten Farb- oder Tiefenänderung verwendet wird.

In anderen Worten kann ein Differenzbild jeder Aufnahme bzw. jedes Bildes aus der Bildersequenz (aus der Sequenz von Bildern) zu ihrem Vorgänger (Vorgänger-Bild bzw. Vorgänger Aufnahme) berechnet werden. Hierbei können beispielsweise alle Pixel/Punkte mit Differenz der Farb- und/oder Tiefenwerte zum Vorgänger werden auf 0/0/0 bzw. 0/0/0/0/0/0 gesetzt werden; Blob-Detektion des Bereichs mit der größten Farb- oder Tiefenänderung, implementiert werden etc. Somit ist in jedem Differenzbild nur noch die Änderung zum Vorgängerbild vorhanden. Diese Änderung entspricht genau dem hinzugefügten Objekt. Somit stellt das Differenzbild die vereinfachte, nur auf das zu erkennende Objekt beschränkte, Version des Ursprungsdatensatzes dar.

Bei einer Ausführungsform kann es vorgesehen sein, dass die Differenzbilder-Annotation eine 6-dimensionale Pose oder Koordinate, Breite und Höhe des entsprechenden Objektes bzw. seiner Umrandung ist.

Die 6-dimensionale Pose ist z.B. x,y,z + Rotation im Raum für BinPicking Anwendungen; Koordinate (x,y) oder Koordinate + Breite + Höhe eines Objektes, einer Umrandung (x,y,b,h) für das Zählen bzw. Vollständigkeitsprüfung.

Der Algorithmus in Schritt S III kann (a) ein synthetisch, oder mit sehr wenigen Daten vortrainiertes Netz sein. Dieses wäre auf vollständigen Bildern noch zu wenig robust, zeigt jedoch auf dem vereinfachten Datensatz (Differenzbildern) bereits sehr gute Ergebnisse. Es kann hierfür jedoch auch (b) ein komplett anderer Algorithmus zum Einsatz kommen, der gegebenenfalls nicht für den Einsatz auf dem vollständigen Datensatz geeignet ist (bspw. ICP - Iterative Closing Point) oder aber aufgrund längerer Rechenzeiten nicht real eingesetzt werden kann. Bei den Differenzbildern können mit ICP gute Ergebnisse erzielt werden. Es kann auch eine Kombination aus (a) und (b) oder mehreren Methoden aus (b) implementiert werden, bei denen mehrere Modelle auf denselben Datensatz angewendet werden und die Ergebnisse, bspw. durch "demokratische" Abstimmung in ein Gesamtergebnis überführt werden.

Bei einer Ausführungsform kann es vorgesehen sein, dass das Annotieren (der Bilder der Sequenz) mittels Übertragens der Differenzbilder-Annotationen von den Differenzbildern auf die Bilder der Sequenz erfolgt. Das Labeling der Bilder der Sequenz kann also durch Übertragen der Label der Differenzbilder auf die Bilder der Sequenz erfolgen.

Bei einer Ausführungsform kann es vorgesehen sein, dass das Annotieren ein Kumulieren der Differenzbilder-Annotationen zu einer Gesamtannotation umfasst.

In anderen Worten kann ein Kumulieren (Aneinanderreihen,ketten) der (aller) Differenzbilder-Annotationen verwendet werden, um Bilder der Sequenz zu annotieren, z.B. jedes Bild, nur das n-te (letzte) Bild oder auch ein Teil der Bilder der Sequenz zu annotieren (hängt davon ab, wie die Differenzbilder-Annotationen kumuliert bzw. aneinandergereiht werden).

Die Label können sequenziell hinzugefügt werden. Beispiel: Beim Hinzulegen des dritten Objekts (dritter Durchlauf von Schritt 2) wird aus Bild 3 (B₃) und dem vorherigen Bild 2 (B₂) eine Differenzbild D₃₋₂ erzeugt. Das zugehörige Differenzlabel L₂₋₃ (bspw. Position im Bild) wird nun mit den Differenzlabels L₁₋₀ und L₂₋₁, die jeweils die Position des ersten und zweiten zugefügten Objekts enthalten, kombiniert. Entsprechend wird durch L₁₋₀ + L₂₋₁ + L₃₋₂ = L₃ das vollständige Label der Gesamtaufnahme B₃ erzeugt, welches die korrekten Positionen aller drei im Bild befindlichen Objekte beinhaltet.

Die Aufgabe wird außerdem mit einem eingangs genannten System erfindungsgemäß dadurch gelöst, dass das System eine Recheneinrichtung und eine an die Recheneinrichtung anschließbare Kamera umfasst, wobei die Recheneinrichtung dazu ausgebildet und konfiguriert ist, das oben beschriebene Verfahren auszuführen.

Darüber hinaus wird die Aufgabe mit einem Computerprogrammprodukt erfindungsgemäß dadurch gelöst, dass das Computerprogrammprodukt Befehle umfasst, die bewirken, dass das vorgenannte System das oben beschriebene Verfahren ausführt.

Des Weiteren wird die Aufgabe mit einer Verwendung der nach einem der oben beschriebenen Verfahren bereitgestellten annotierten Trainings-Bilddaten zum Trainieren einer Funktion gelöst.

Darüber hinaus wird die Aufgabe mit einer Verwendung der Trainings-Bilddaten, die nach dem vorgenannten Verfahren bereitgestellt werden, zum Trainieren einer Funktion gelöst.

Mit anderen Worten wird die Aufgabe mit einem Verfahren zum Trainieren einer Funktion erfindungsgemäß dadurch gelöst, dass eine (z.B. untrainierte oder vortrainierte) Funktion mit Trainings-Bilddaten trainiert wird, wobei die Trainings-Bilddaten nach dem vorgenannten Verfahren bereitgestellt werden.

Die Funktion kann beispielsweise auf einem künstlichen neuronalen Netz für Bildverarbeitung, insbesondere auf einem CNN basieren.

Die trainierte Funktion ist für eine Objekterkennung besonders gut geeignet.

Offenbart ist außerdem ein Objekterkennungsverfahren, bei dem eine solche, mit den wie oben beschrieben erzeugten annotierten Trainings-Bilddaten trainierte Funktion verwendet wird. Insbesondere ist ein Objekterkennungsverfahren zur Vollständigkeitskontrolle oder zum Zählen der in der Umgebung befindlichen Objekte offenbart.

Darüber hinaus ist ein Poseschätzungsverfahren, insbesondere ein Poseschätzungsverfahren zu Ermittlung der Position und Rotation eines oder mehrerer Objekte im Raum, z.B. für die automatisierte Handhabung, vorzugsweise durch einen Robotergreifarm, offenbart.

Das vorgenannte Objekterkennungsverfahren zur Vollständigkeitskontrolle oder zum Zählen der in der Umgebung befindlichen Objekte kann bspw. bei Herstellung von elektronischen Baugruppen, insbesondere von elektronischen Flachbaugruppen verwendet werden, indem beispielsweise nach einem Prozessschritt die Bestückung der Leiterplatte kontrolliert wird.

Das Poseschätzungsverfahren zu Ermittlung der Position und Rotation eines oder mehrerer Objekte im Raum kann z.B. in der roboterunterstützten Fertigung eingesetzt werden, bei der Roboter verwendet werden, die aus mehreren Bauteilen, die in unterschiedlichen Behältern liegen, ein Gesamtbauteil zusammenzusetzen. Das Gesamtbauteil kann beispielsweise ein Zwischenprodukt sein, das nach einem Prozessschritt entsteht.

Denkbar ist auch eine Anwendung, bei der sich Objekterkennungsverfahren und Poseschätzungsverfahren gemeinsam eingesetzt werden. Dies kann auch bei einer automatisierten Herstellung von elektronischen Baugruppen, insbesondere Flachbaugruppen geschehen. Dabei kann ein Roboter dazu verwendet werden, eine Leiterplatte mit elektronischen Bauelementen zu bestücken. Der Roboter wird dabei von einer Steuereinheit gesteuert, welche Steuereinheit einen Speicher aufweisen kann, auf dem eine mit den wie oben beschrieben bereitgestellten annotierten Trainings-Bilddaten trainierte (erste) Funktion ausführbar gespeichert und in Betrieb ausgeführt wird, wobei als Label die 6-dimensionale Pose verwendet wurde. Somit kann der Roboter die entsprechenden elektronischen Bauteile aus den Bauteilen korrespondierenden Behältern greifen. Außerdem kann neben dem die Leiterplatten bestückenden Roboter ein Kontrollsystem vorgesehen sein, das eine Auswerteeinrichtung und eine Bildaufnahmevorrichtung, z.B. eine Kamera, insbesondere eine Digitalkamera aufweist, die mit der Auswerteeinrichtung zum Datenaustausch (z.B. über Kabel oder über Funk) verbunden ist. Die Auswerteeinrichtung kann eine mit den wie oben beschrieben bereitgestellten annotierten Trainings-Bilddaten trainierte (zweite) Funktion ausführbar gespeichert und in Betrieb ausgeführt wird, wobei als Label Koordinaten, Breiten und Höhen der entsprechenden elektronischen Bauelemente bzw. ihrer Umrandung verwendet wurde. Die Funktion kann bestimmte Bauteile auf einer Leiterplatte erkennen und deren Position ermitteln. Auf diese Weise kann durch einen Stücklistenabgleich die korrekte Bestückung der Leiterplatte ermittelt werden. Somit kann das Kontrollsystem eine Vollständigkeitskontrolle, bei der geprüft wird, ob die Bestückung aller bei einem bestimmten Prozessschritt zu bestückenden elektronischen Bauelemente erfolgte.

Der entwickelte Lösungsansatz ist ein Verfahren, welches darauf abzielt, die realen Daten automatisiert derart zu vereinfachen, dass eine automatisierte Label- bzw. Annotation-Generierung möglich wird. Entsprechend entfällt durch dieses Verfahren der manuelle Labeling-Aufwand. Für das Training können jedoch trotzdem die nicht vereinfachten, für die Realität repräsentativen Daten genutzt werden.

Das Verfahren ist universell einsetzbar sowohl für 2D-Bildaufnahmen (Farbe oder Graustufen) sowie 3D-Aufnahmen (Punktwolken oder Tiefenbilder).

Es ist potenziell anwendbar für alle KI-basierten Bildverarbeitungsanwendungen (überwachtes Lernen). Dazu zählen optische Inspektion, Zählanwendungen, Bin Picking, etc. Es ermöglicht eine einfache, skalierbare Anwendung von KI in der Bildverarbeitung.

Die Erfindung samt weiteren Vorteilen ist im Folgenden anhand beispielhafter Ausführungsformen näher erläutert, die in der Zeichnung veranschaulicht sind. In dieser zeigt
- FIG 1: ein Ablaufdiagramm eines computerimplementierten Verfahrens,
- FIG 2: ein (Zwischen)Ergebnis,
- FIG 3: ein annotiertes Differenzbild und ein annotiertes Bild der Bildersequenz,
- FIG 4: ein Bild aus der Bildersequenz, eine Kumulation der Differenzbilder-Annotationen zu seiner Annotation und das annotierte Bild, und
- FIG 5: ein System, in dem das Verfahren implementiert werden kann, und
- FIG 6: ein Anwendungsszenario.

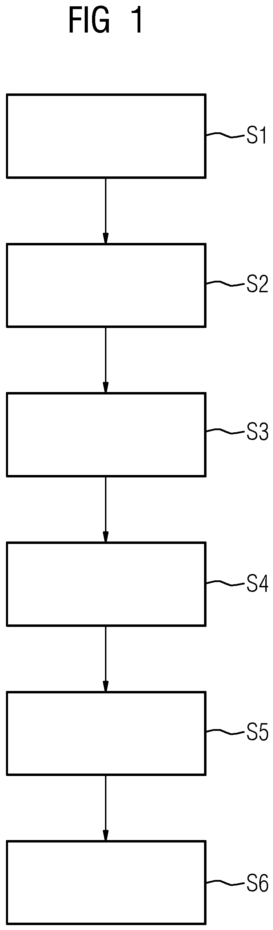

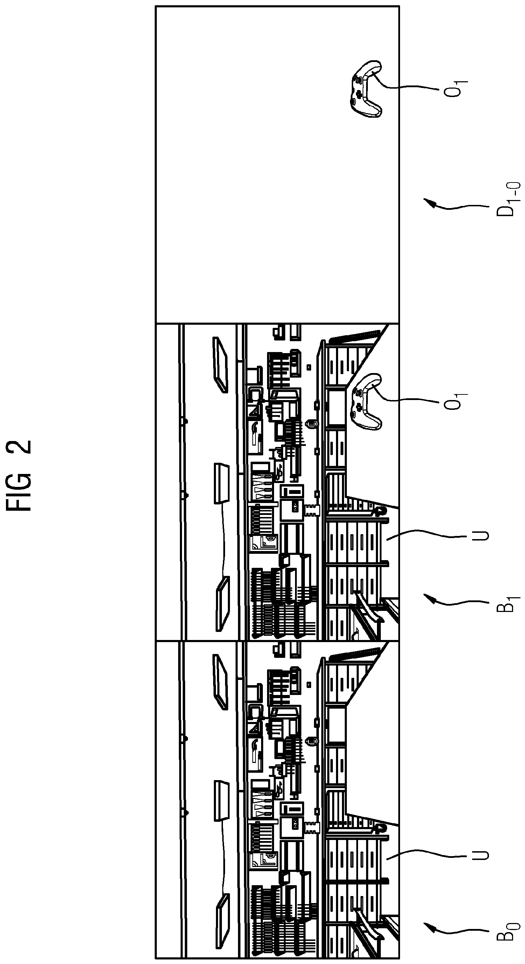

Zunächst wird auf FIG 1 und FIG 2 Bezug genommen. FIG 1 zeigt ein Ablaufdiagramm eines computerimplementierten Verfahrens zum Erzeugen, automatisierten Annotieren und zum Bereitstellen von Trainings-Bilddaten, die zum Trainieren einer Funktion zu einer Erkennung von in einer Umgebung befindlichen Objekten verwendet wird.

Das gezeigte Verfahren umfasst sechs Schritte. FIG 2 veranschaulicht ein mögliches (Zwischen)Ergebnis der ersten drei Schritte des Verfahrens.

In einem Schritt S1 wird ein Referenzbildes B₀ der, beispielsweise leeren, d.h. ohne der (später zu erkennenden) Objekte, Umgebung U erzeugt (siehe FIG 2).

Für die spätere Anwendung der Funktion kann es zweckmäßig sein, wenn die Umgebung, anhand derer das Referenzbild B₀ erzeugt wird, entweder exakt die Umgebung ist, in der die spätere Anwendung stattfindet oder dieser entspricht, so dass das Referenzbild B₀ die Umgebung U entweder exakt oder möglichst nah abbildet.

Das Erzeugen kann beispielsweise durch Aufnehmen der Umgebung U mit einer Kamera (2D oder 3D) erfolgen. Das Referenzbild B₀ hat ein leeres Label, da noch keine hinsichtlich der späteren Anwendung relevanten Objekte in die Umgebung U eingebracht worden sind.

Die Umgebung kann beispielsweise eine Arbeitsumgebung, wie in FIG 2, sein oder die Umgebung eine unbestückte Leiterplatte oder einen leeren zur Aufnahme von mit einem Roboterarm greifbaren Bauteilen vorgesehenen Behälter umfassen.

Eine unbestückte Leiterplatte kann z.B. auf einer Produktionsinsel einer Fertigungshalle angeordnet sein.

In einem weiteren Schritt S2 wird eine Sequenz aus i=1, ..., n Bildern B₁, B₂, ... Bₙ erzeugt. Das i-te Bild Bᵢ der Sequenz ist dabei ein Bild der Umgebung mit (genau) i darin enthaltenen, zu erkennenden Objekten O₁, O₂, ... Oᵢ. Es versteht sich, dass n größergleich 1 (n ≥ 1) ist.

Vorzugsweise werden die Objekte O₁, O₂, ... Oₙ der Umgebung U händisch hinzugefügt. Anschließend wird ein Bild der Umgebung mit der Kamera gemacht. Vorteilhaft ist dabei, dass reale Daten entstehen, was die Funktion, z.B. das neuronale Netz robuster macht.

FIG 2 lässt beispielsweise erkennen, dass das erste Bild B₁ der Sequenz dadurch entsteht, dass ein Spielecontroller O₁ händisch in die Umgebung U eingebracht (er wurde auf den Arbeitstisch gelegt) und anschließend die Umgebung U mit dem darin enthaltenen Spielecontroller O₁ fotografiert wird.

Die Objekte können auch als elektronische Bauelemente ausgebildet sein, die z.B. auf der vorgenannten Leiterplatte oder in dem vorgenannten Behälter angeordnet sein können.

Die Objekte können alle unterschiedlich oder alle gleich sein.

Die Objekte O₁, O₂, ... Oₙ werden vorzugsweise an zufälligen bzw. zufällig gewählten Positionen in der Umgebung U angeordnet.

Beim Erzeugen der Bildersequenz B₁, B₂, ... Bₙ können die einzelnen Objekte O₁, O₂, ... Oₙ in die Umgebung U iterativ hinzugefügt werden, wobei nach dem Hinzufügen eines jeden Objektes die Umgebung U fotografiert wird.

Es kann auch zweckdienlich sein, wenn die Positionen und/oder Orientierung der Objekte O₁, O₂, ... Oₙ im Raum nachdem sie in die Umgebung U hinzugefügt wurden, nicht mehr verändert werden, bis das Erzeugen der Bildersequenz B₁, B₂, ... Bₙ abgeschlossen ist. Bezugnehmend auf FIG 2 heißt das, dass die Position des Spielecontrollers O₁ auf allen Bildern der Bildersequenz B₁, B₂, ... Bₙ gleich ist, und zwar die, die auf dem Bild B₁ zu sehen ist.

Das Hinzufügen der Objekte Oᵢ kann beispielsweise solange fortgeführt werden, bis kein weiteres Objekt hinzugefügt werden kann, ohne eines oder mehrere der bereits hinzugefügten Objekte verschieben zu müssen.

Schritt S2 kann (beliebig oft) wiederholt werden, um (beliebig viele) Bildersequenzen zu erzeugen. Dies wirkt sich positiv auf die Robustheit und Genauigkeit der Funktion aus, die mit diesen Bildern trainiert wird.

Wenn eine neue Bildersequenz aufgenommen wird, kann es zweckdienlich sein, die Objekte an andere Positionen zu platzieren, um den Trainingseffekt zu verbessen.

In einem Schritt S3 werden anhand der Bildersequenz B₁, B₂, ... Bₙ Differenzbilder Dᵢ₋₍ᵢ₋₁₎, i=2, ..., n erzeugt. Jedes Differenzbild wird anhand eines Bildes der Bildersequenz und seinem unmittelbaren Vorgänger erzeugt. Z.B. wird ein Differenzbildes Dᵢ₋₍ᵢ₋₁₎ des i-ten Bildes Bᵢ zu dem (i-1)-ten Bild Bᵢ₋₁ der Sequenz berechnet. Dies führt dazu, dass in dem Differenzbild nur die Änderung des i-ten Bildes zu seinem Vorgänger zu erkennen ist (siehe FIG 2).

Die Berechnung wird für jedes i=2, ..., n wiederholt, bis alle Differenzbilder berechnet wurden.

FIG 2 lässt erkennen, dass ein Differenzbild D₁₋₀ zwischen dem Bild B₁ (mit) und dem Referenzbild B₀ berechnet wurde und in dem Differenzbild D₁₋₀ nur der Spielecontroller O₁ zu erkennen ist.

Zum Berechnen der Differenzbilder Dᵢ₋₍ᵢ₋₁₎ können beispielsweise alle Pixel/Punkte eines bestimmten Bildes Bᵢ der Sequenz, die eine von Null abweichende Differenz der Farb- und/oder Tiefenwerte zu den korrespondierenden Pixeln/Punkten des Vorgänger-Bildes Bᵢ₋₁ aufweisen, auf null gesetzt werden. Außerdem kann zum Berechnen eine Blob-Detektion des Bereichs mit der größten Farb- oder Tiefenänderung verwendet werden.

In anderen Worten wird ein Differenzbild jeder Aufnahme zu deren Vorgänger berechnet. Somit ist in jedem Differenzbild nur noch die Änderung zum Vorgängerbild vorhanden. Diese Änderung entspricht naturgemäß genau dem hinzugefügten Objekt. FIG 2 zeigt ein Beispiel eines (Zwischen)Ergebnisses bei der Erzeugung einer Bildersequenz B₀, B₁ und der daraus berechneten Differenzbilder D₁₋₀.

In einem Schritt S4 wird ein (zur Annotation geeigneter) Algorithmus auf jedes Differenzbild Dᵢ₋₍ᵢ₋₁₎ für i=1, ..., n angewandt, um jedes Differenzbild (Dᵢ₋₍ᵢ₋₁₎) zu annotieren.

Der Algorithmus kann beispielsweise ein synthetisch oder mit sehr wenigen für die spätere Anwendung charakteristischen Daten vortrainiertes Netz sein (siehe z.B. EP Anmeldung der Anmelderin mit der Nummer 20 176 860.3).

Darüber hinaus können auch Algorithmen angewandt werden, die zum Labeln von einfachen Bildern, die die Differenzbilder sind, besonders gut geeignet sind. Ein solcher Algorithmus ist ein auf einem ICP-Algorithmus (engl.: Iterative Closing Point) basierender Algorithmus. Es können auch Kombinationen aus beiden genannten Methoden implementiert werden, bei denen mehrere Modelle auf denselben Datensatz angewendet werden und die besten Ergebnisse gewählt werden.

Die Differenzbilder-Annotationen Lᵢ₋₍ᵢ₋₁₎, i = 1, ..., n können beispielsweise als 6-dimensionale Posen oder Koordinaten, Breiten und Höhen der entsprechenden Objekte Oᵢ bzw. ihrer Umrandung sein.

In einem Schritt S5 werden die Bilder der Sequenz anhand der Differenzbilder-Annotationen Lᵢ₋₍ᵢ₋₁₎ annotiert.

Das Annotieren kann beispielsweise durch Übertragen der Differenzbilder-Annotationen Lᵢ₋₍ᵢ₋₁₎ von den Differenzbildern Dᵢ₋₍ᵢ₋₁₎ auf die Bilder Bᵢ der Sequenz erfolgen.

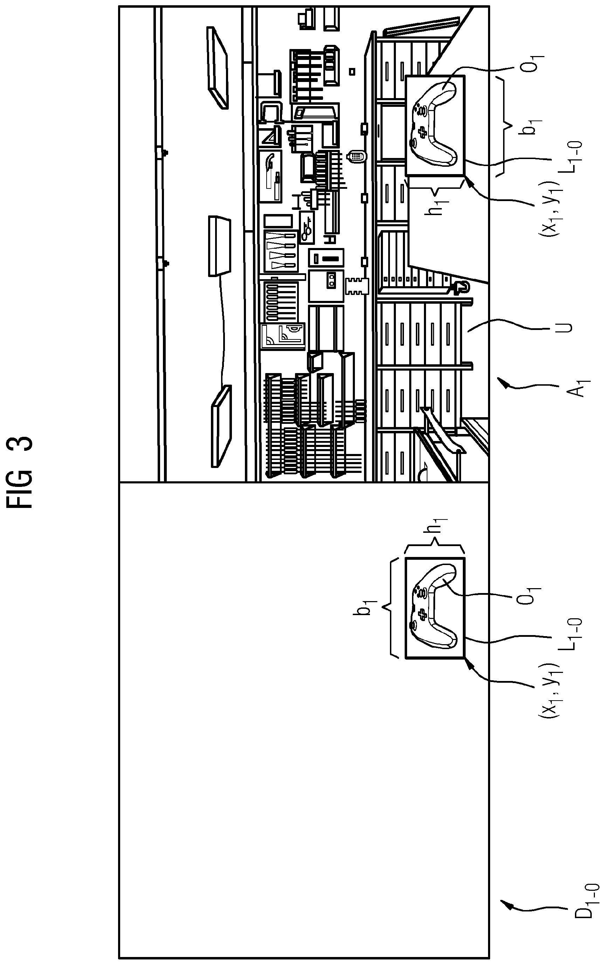

FIG 3 zeigt Inferenz des Labels Lᵢ₋₍ᵢ₋₁₎ auf ein Differenzbild und eine Übertragung auf die Bildersequenz.

FIG 3 lässt ein annotiertes Differenzbild D₁₋₀ und ein auf Grundlage des annotierten Differenzbildes erzeugtes annotierte Bild A₁ der Bildersequenz erkennen. Das Label L₁₋₀ besteht dabei aus einer Umrandung mit einer Breite b₁, einer Höhe h₁, deren beispielsweise linke untere Ecke eine Koordinate (X₁, Y₁) in dem Bild A₁ aufweist.

Die Differenzbilder-Annotationen Lᵢ₋₍ᵢ₋₁₎ können zu einer Gesamtannotation Gᵢ kumuliert werden. Dabei werden die einzelnen Differenzbilder-Annotationen Lᵢ₋₍ᵢ₋₁₎ aneinandergereiht, um eine Gesamtannotation Gᵢ für das Bild Bᵢ der Bildersequenz zu erzeugen. Dabei können die Label sequenziell hinzugefügt werden. Z.B. wird das zweite Objekt bei einem Bild mit zwei Objekten, bei dem das erste Objekt bereits annotiert wurde, aus dem entsprechenden Differenzbild annotiert.

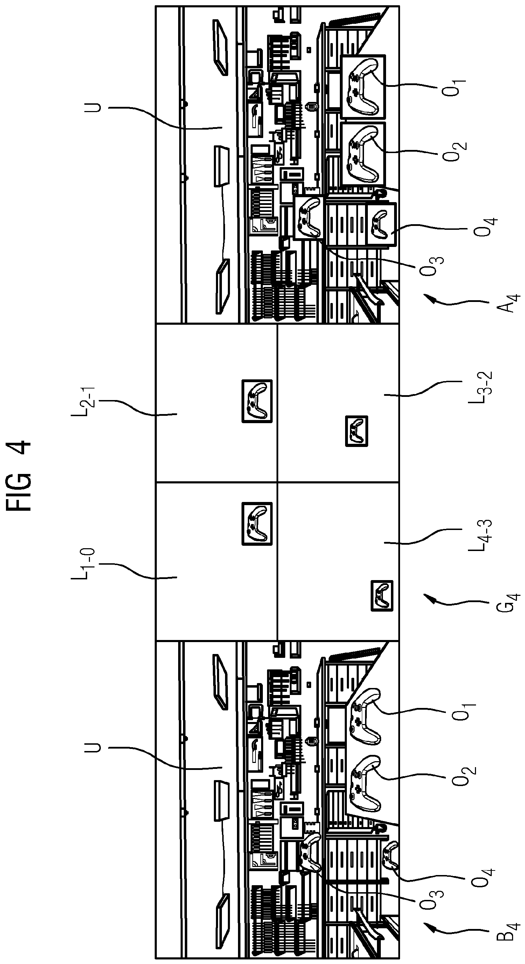

Eine beispielhafte Kumulation des Labels wird in FIG 4 veranschaulicht. FIG 4 zeigt ein Bild B₄ der Bildersequenz, das vier Objekte O₁, O₂, O₃, O₄ enthält, ein aus den einzelnen Differenzlabels L₁₋₀ bis L₄₋₃ erhältliches vollständige Label G₄ der Gesamtaufnahme (hier B₄) und das annotierte Bild A₄. Das vollständige Label G₄ beinhaltet die korrekten Positionen aller vier im Bild B₄ befindlichen Objekte O₁, O₂, O₃, O₄.

In einem Schritt S6 werden die annotierten Trainings-Bilddaten bereitgestellt.

Das mit Bezug auf Figuren 1 bis 4 beschriebene Verfahren ist ähnlich durchzuführen, wenn als Referenzbild (Startbild der Sequenz) ein Bild der Umgebung mit allen n darin positionierten, zu erkennenden Objekten aufgenommen wird, und die Sequenzbilder Bᵢ durch iteratives Entfernen des einzelnen Teils und anschließendes Aufnehmen der reduzierten Szene erfolgt.

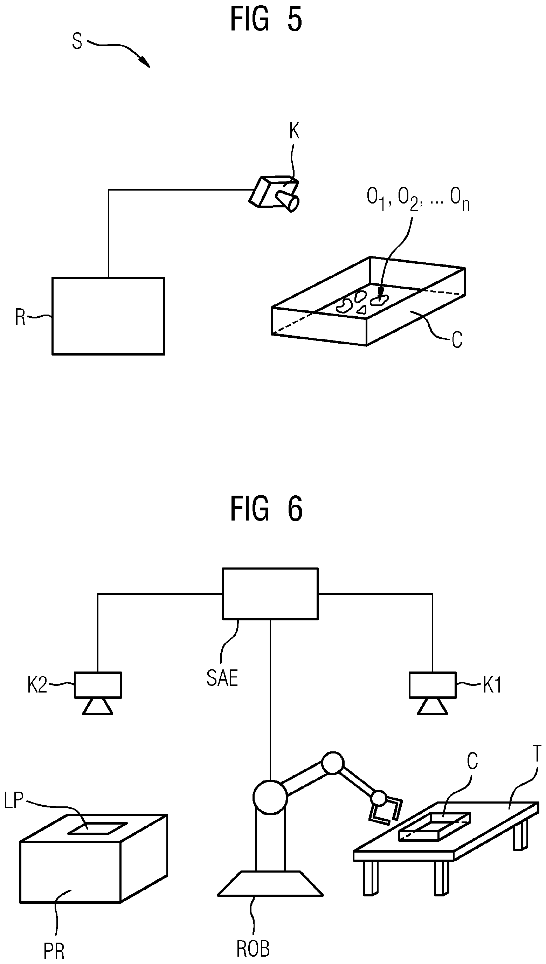

FIG 5 zeigt eine mögliche Implementierung des computerimplementierten Verfahrens.

Das gezeigte System S umfasst eine Recheneinrichtung R, eine an die Recheneinrichtung R anschließbare Kamera K, die zur Aufnahme einer einen Behälter C umfassenden Umgebung angeordnet und eingerichtet ist. In den Behälter C können ein oder mehrere Objekte O₁, ..., Oₙ hineingelegt werden. Die Recheneinrichtung kann dazu konfiguriert sein, die Kamera K zu steuern und damit Bilder aufzunehmen. Insbesondere ist die Recheneinrichtung dazu konfiguriert, die Schritte S3 bis S6 auszuführen. Schritte S1 und S2 können ebenfalls vollständig durch die Recheneinrichtung R ausgeführt werden. Wenn die Objekte O₁, ..., Oₙ händisch in die Szene (Umgebung) hinzugefügt werden, sind alle Schritte des Verfahrens bis auf den Schritt des Hinzufügens automatisch (durch die Recheneinrichtung) auszuführen.

Zum Ausführen des Verfahrens kann die Recheneinrichtung R ein Computerprogramm bzw. ein Computerprogrammprodukt mit Befehlen umfassen. Wenn diese Befehle durch die Recheneinrichtung R abgearbeitet werden, wird das System S dazu veranlasst, das computerimplementierte Verfahren auszuführen.

Des Weiteren kann das Computerprogramm eine Schnittstelle zur Bereitstellung der annotierten Trainings-Bilddaten umfassen. Die Daten können beispielsweise auf der Recheneinrichtung gespeichert und zum Trainieren einer Funktion, die z.B. auf einem neuronalen Netz, insbesondere auf einem Convolutional Neural Network (CNN) basieren kann. Die untrainierte oder auf anderen Bildern vortrainierte Funktion, z.B. CNN kann auf die Recheneinrichtung R übertragen und/oder auf der Recheneinrichtung R gespeichert sein.

Die mit den annotierten Trainings-Bilddaten (mit den aufgenommenen annotierten Bildern Aᵢ der Sequenz sowie den zugehörigen Labeln Gᵢ) trainierte Funktion, z.B. das CNN, kann auf der Recheneinrichtung R zur späteren Anwendung gespeichert werden oder einem anderen System, z.B. einem eine Cloud-Infrastruktur umfassenden Ökosystem bereitgestellt werden.

Somit kann die Recheneinrichtung dazu konfiguriert sein, das Training einer Funktion basierend auf den annotierten Trainings-Bilddaten durchzuführen.

Die in FIG 5 gezeigte Umgebung mit dem Behälter C eignet sich besonders gut, wenn die spätere Anwendung Bin-Picking ist, d.h. wenn ein Roboterarm aus dem Behälter C bestimmte Bauteile unter einem bestimmten Winkel greifen soll, usw. Bei dieser Anwendung ist es zweckmäßig, wenn das Label die 6-dimensionale Pose ist.

Wenn die Umgebung statt dem Behälter C eine Produktionsinsel mit einer oder mehrehren Leiterplatten umfasst, so eignen sich die annotierten Trainings-Bilddaten, die Bilder mit unbestückten und teilweise bestückten Leiterplatten umfassen, besonders gut für Anwendungen im Bereich der Flachbaugruppenproduktion.

FIG 6 zeigt ein Szenario für eine mögliche Anwendung einer Funktion, die mit den wie oben beschrieben erzeugten annotierten Trainings-Bilddaten trainiert wurde. FIG 6 lässt eine Produktionsumgebung erkennen. Die Produktionsumgebung umfasst eine Produktionsinsel PR mit einer an der Produktionsinsel angeordneten Leiterplatte LP. Darüber hinaus ist ein Tisch T mit einem Behälter C zu sehen, der elektronische Bauteile für die Bestückung der Leiterplatte LP enthält. Ein Roboter ROB ist in der Produktionsumgebung angeordnet.

Der Roboter ROB ist mit einer Steuer- und Auswerteeinrichtung SAE kommunikativ verbunden, die ihrerseits mit zwei Kameras K1, K2 verbunden ist. Die erste Kamera K1 ist angeordnet, um dem Roboter das Greifen der elektronischen Bauteile zu erleichtern. Die zweite Kamera ist angeordnet, um das Kontrollieren der Bestückung der Leiterplatte LP durch den Roboter ROB zu erleichtern.

Die Steuer- und Auswerteeinrichtung SAE kann dabei zwei Funktionen umfassen. Eine erste Funktion ist beispielsweise mit den wie oben beschrieben bereitgestellten annotierten Trainings-Bilddaten trainiert, wobei als Label die 6-dimensionale Pose verwendet wurde. Die erste Funktion kann beim Durchführen eines Poseschätzungsverfahrens in der Steuer- und Auswerteeinrichtung SAE verwendet werden. Die Umgebung beim Training umfasst dann den Behälter C.

Eine zweite Funktion ist mit den wie oben beschrieben bereitgestellten annotierten Trainings-Bilddaten trainiert, wobei als Label Koordinaten, Breiten und Höhen der entsprechenden elektronischen Bauelemente bzw. ihrer Umrandung verwendet wurde. Die zweite Funktion kann somit bei einer Vollständigkeitskontrolle verwendet werden, bei der geprüft wird, ob die Bestückung aller bei einem bestimmten Prozessschritt zu bestückenden elektronischen Bauelemente erfolgte. Die Umgebung beim Training umfasst z.B. eine unbestückte Leiterplatte.

Die Aufgabe dieser Beschreibung besteht lediglich darin, veranschaulichende Beispiele bereitzustellen und weitere Vorteile und Besonderheiten dieser Erfindung anzugeben, und somit kann sie nicht als Einschränkung des Anwendungsgebiets der Erfindung beziehungsweise der in den Ansprüchen beanspruchten Patentrechte interpretiert werden. Insbesondere können die im Zusammenhang mit den hier beschriebenen Verfahren offenbarte Merkmale sinnvollerweise zur Weiterbildung der hier beschriebenen Systeme eingesetzt werden und *vica versa.*

In den Ausführungsbeispielen und Figuren können gleiche oder gleich wirkende Elemente jeweils mit den gleichen Bezugszeichen versehen sein. Die Bezugszeichen, insbesondere in den Ansprüchen, sind lediglich zur Vereinfachung der Findung der mit den Bezugszeichen versehenen Elemente vorgesehen und haben keine einschränkende Wirkung auf den unter den Schutz gestellten Gegenstand inne.

## Patentansprüche

1. Computerimplementiertes Verfahren zum Erzeugen, automatisierten Annotieren und zum Bereitstellen von Trainings-Bilddaten zum Trainieren einer Funktion zu einer Erkennung von in einer Umgebung befindlichen Objekten, wobei das Verfahren umfasst:
S I: Erzeugen einer Sequenz aus i=0, 1, 2, ..., n Bildern (B₀, B₁, B₂, ..., Bₙ), wobei das i-te Bild (Bᵢ) der Sequenz ein Bild einer Umgebung mit i darin enthaltenen, zu erkennenden Objekten (O₁, O₂, ... Oₙ) ist;
S II: Berechnen eines Differenzbildes (Dᵢ₋₍ᵢ₋₁₎) des i-ten Bildes (Bᵢ) zu dem (i-1)-ten Bild (Bᵢ₋₁) der Sequenz für jedes i=2,...,n, wobei für i=1 ein Differenzbild des Bildes (B₁) mit nur einem zu erkennenden Objekt und dem Bild der Umgebung (B₀) berechnet wird.
S III: Anwenden eines Algorithmus auf die Differenzbilder (Dᵢ₋₍ᵢ₋₁₎), um jedes Differenzbild (Dᵢ₋₍ᵢ₋₁₎) zu annotieren.
S IV: Annotieren der Bilder der Sequenz anhand der Differenzbilder-Annotationen (Lᵢ₋₍ᵢ₋₁₎).
S V: Bereitstellen der annotierten Trainings-Bilddaten.

2. Verfahren nach Anspruch 1, wobei die Umgebung eine unbestückte Leiterplatte oder einen leeren zur Aufnahme von mit einem Roboterarm greifbaren Bauteilen vorgesehenen Behälter umfasst.

3. Verfahren nach Anspruch 1 oder 2, wobei die Objekte (O₁, O₂, ... Oₙ) als elektronische Bauelemente oder als Bauteile ausgebildet sind.

4. Verfahren nach einem der Ansprüche 1 bis 3, wobei die Objekte (O₁, O₂, ... Oₙ) an zufälligen Positionen in der Umgebung angeordnet sind.

5. Verfahren nach einem der Ansprüche 1 bis 4, wobei das Erzeugen der Sequenz aus i=1, 2, ..., n Bildern ein Hinzufügen der Objekte (O₁, O₂, ... Oₙ), vorzugsweise ein iteratives Hinzufügen, der Objekte, in die Umgebung und Aufnehmen der Umgebung mit den in die Umgebung hinzugefügten Objekten umfasst.

6. Verfahren nach einem der Ansprüche 1 bis 4, wobei das Erzeugen der Sequenz aus i=1, 2, ..., n Bildern ein Entfernen, vorzugsweise ein iteratives Entfernen, der Objekte (O₁, O₂, ... Oₙ) aus der Umgebung und Aufnehmen der Umgebung mit den in der Umgebung gebliebenen Objekten umfasst.

7. Verfahren nach Anspruch 5 oder 6, wobei die Positionen und/oder Orientierung der Objekte in der Umgebung nicht mehr verändert werden, bis die Sequenz erzeugt ist.

8. Verfahren nach einem der Ansprüche 1 bis 7, wobei Schritt S I wiederholt wird, um zwei oder mehr Sequenzen zu erzeugen.

9. Verfahren nach einem der Ansprüche 1 bis 8, wobei zum Berechnen der Differenzbilder (Dᵢ₋₍ᵢ₋₁₎) alle Pixel mit einer Differenz der Farb- und/oder Tiefenwerte zum Vorgänger auf null gesetzt werden und/oder eine Blob-Detektion des Bereichs mit der größten Farb- oder Tiefenänderung verwendet wird.

10. Verfahren nach einem der Ansprüche 1 bis 9, wobei die Differenzbilder-Annotation (Lᵢ₋₍ᵢ₋₁₎) eine 6-dimensionale Pose oder Koordinate, Breite und Höhe des entsprechenden Objektes bzw. seiner Umrandung ist.

11. Verfahren nach einem der Ansprüche 1 bis 10, wobei das Annotieren ein Übertragen der Differenzbilder-Annotationen von den Differenzbildern (Dᵢ₋₍ᵢ₋₁₎) auf die Bilder (Bᵢ) der Sequenz umfasst.

12. Verfahren nach einem der Ansprüche 1 bis 11, wobei das Annotieren ein Kumulieren der Differenzbilder-Annotationen (Lᵢ₋₍ᵢ₋₁₎) zu einer Gesamtannotation (Gᵢ) umfasst.

13. System umfassend eine Recheneinrichtung (R) und eine an die Recheneinrichtung (R) anschließbare Kamera (K), wobei die Recheneinrichtung (R) dazu ausgebildet und konfiguriert ist, ein Verfahren nach einem der Ansprüche 1 bis 12 auszuführen.

14. Computerprogrammprodukt, umfassend Befehle, die bewirken, dass das System nach Anspruch 13 ein Verfahren nach einem der Ansprüche 1 bis 12 ausführt.

15. Verwendung der nach einem Verfahren nach einem der Ansprüche 1 bis 12 bereitgestellten Trainings-Bilddaten zum Trainieren einer Funktion.
